# EUROPEAN PATENT APPLICATION

(11) **EP 4 799 808 A1**
(43) Date of publication of application: **02.09.2026**
(21) Application number: 24882656.2
(22) Date of filing: 19.09.2024
(51) Int. Cl.: B32B 17/10, H01Q 1/32, H01Q 1/42, H01Q 1/38, H01Q 9/04

(54) **LAMINATED GLASS AND MANUFACTURING METHOD FOR LAMINATED GLASS**

(30) Priority: 23.10.2023 KR 20230142274
(71) Applicant: KCC GLASS Corporation, Seoul 06526 (KR)
(72) Inventor: BOK, Jin-Bi, Seoul 06095 (KR); CHO, Seong-Dae, Seongnam-si, Gyeonggi-do 13481 (KR); PARK, Sang-Jin, Yongin-si, Gyeonggi-do 16851 (KR); PARK, Ji-Su, Seongnam-si, Gyeonggi-do 13634 (KR); KIM, Kyungmin, Yongin-si, Gyeonggi-do 16909 (KR)
(74) Representative: Pfenning, Meinig & Partner mbB
(86) International application number: PCT/KR2024/014119
(87) International publication number: WO 2025/089627

(57) **Abstract**

The present invention relates to a laminated glass and a method of manufacturing a laminated glass, the laminated glass including a first glass, a second glass that is spaced from the first glass in a reference direction and includes a first hole perforated in the reference direction, an antenna disposed between the first glass and the second glass, a circuit board that passes through the first hole and is connected to the antenna, and a cover portion that is coupled to a surface of a side of the first glass in the reference direction and extends along an edge of the surface of the side of the first glass in the reference direction, wherein, when viewed in the reference direction, the cover portion covers the first hole.

## Description

### [Technical Field]

The present invention relates to a laminated glass and a method of manufacturing a laminated glass.

### [Background Art]

With commercialization of vehicle-to-vehicle wireless communication services such as cellular vehicle-to-everything communication (CV2X) in recent years, vehicles are now being equipped with apparatuses for supporting such new services.

A shark fin antenna for wireless communication may be disposed on a vehicle. The shark fin antenna may receive electrical signals from a 4G (Long Term Evolution (LTE)) communication band, an eCall communication band, industrial, scientific, and medical (ISM) communication bands, the Global Positioning System (GPS), a global navigation satellite system (GNSS), a digital multimedia broadcasting (DMB) system, a digital audio broadcasting (DAB), or an integrated services digital broadcasting terrestrial (ISDB-T) system.

Because a shark fin antenna is a configuration attached to the outside of a vehicle, there is an inconvenience that an aerodynamic factor and an aesthetic factor have to be taken into consideration, and transparent antenna films have recently gained attention in the market as one alternative for embedding such a shark fin antenna in a vehicle.

A transparent antenna film for a vehicle may be located in the glass of the vehicle. For example, a transparent antenna film for a vehicle may be disposed in the front glass of the vehicle. However, because the front glass of a vehicle is inserted into a vehicle frame made of a metal, there is a problem that the antenna film receives interference from the vehicle frame.

Although spacing the antenna film from the vehicle frame is favorable for minimizing interference, in this case, a length of a portion for supplying electricity to the antenna film may increase. When the length of the portion for supplying electricity to the antenna film increases, there is a problem that a signal reception rate of the antenna film decreases.

Therefore, there is a need for development of a technology allowing efficient arrangement of components while minimizing interference.

### [Disclosure]

### [Technical Problem]

The present invention is directed to providing a laminated glass and a method of manufacturing a laminated glass capable of minimizing interference applied to an antenna film disposed in a glass of a vehicle and securing a signal reception rate of the antenna film.

### [Technical Solution]

In one example, a laminated glass includes a first glass, a second glass that is spaced from the first glass in a reference direction and includes a first hole perforated in the reference direction, an antenna disposed between the first glass and the second glass, a circuit board that passes through the first hole and is connected to the antenna, and a cover portion that is coupled to a surface of a side of the first glass in the reference direction and extends along an edge of the surface of the side of the first glass in the reference direction, wherein, when viewed in the reference direction, the cover portion covers the first hole.

In another example, the laminated glass may further include a first middle layer that is in contact with the side of the first glass in the reference direction and a second middle layer that is in contact with a side of the second glass in an opposite direction of the reference direction, wherein a second hole that communicates with the first hole and has a shape corresponding to the first hole may be formed in the second middle layer, and the circuit board may pass through the first hole and the second hole.

In yet another example, the antenna may be mounted on a side of the second middle layer in the opposite direction of the reference direction, the circuit board may include a first portion that has one end connected to the antenna and is mounted on the side of the second middle layer in the opposite direction of the reference direction, a second portion that extends from the other end of the first portion in the reference direction and passes through the first hole and the second hole, and a third portion that extends from an end of a side of the second portion in the reference direction and is in contact with a surface of a side of the second glass in the reference direction, and a direction in which the first portion extends from the second portion and a direction in which the third portion extends from the second portion may correspond to each other.

In still another example, the laminated glass may further include a sealing material with which remaining areas of the first hole and the second hole excluding areas occupied by the circuit board are filled.

In still another example, the antenna may be a coplanar waveguide with ground (CPWG) antenna, the circuit board may be a flexible printed circuit board (FPCB), a length of the circuit board may range from 20 mm to 70 mm, and the sealing material may be a thermoplastic resin.

In still another example, when viewed in the reference direction, the antenna may include an area that does not overlap the cover portion.

In one example, a method of manufacturing a laminated glass includes a preparing step of preparing a first glass and a second glass, a first drilling step of drilling a first hole in the second glass, an antenna assembling step of placing an antenna between the first glass and the second glass and passing a circuit board connected to the antenna through the first hole, and a sealing step of filling the first hole with a sealing material.

In another example, the method may further include a second middle layer mounting step of mounting a second middle layer on the second glass and a second drilling step of forming a second hole that communicates with the first hole and has a shape corresponding to the first hole in the second middle layer.

In still another example, in the antenna assembling step, the circuit board may pass through the first hole and the second hole, and in the sealing step, the first hole and the second hole may be filled with the sealing material.

### [Advantageous Effects]

According to the present invention, because a vehicle frame and an antenna film can be sufficiently spaced, interference applied to the antenna film can be minimized.

In addition, according to the present invention, because a length of a portion supplying an electrical signal to an antenna film can be shortened while the antenna film and a vehicle frame are spaced, a reception rate of the antenna film can be sufficiently secured.

### [Description of Drawings]

FIG. 1 is a view illustrating a laminated glass according to one embodiment of the present invention.
FIG. 2 is a cross-sectional view of the laminated glass according to one embodiment of the present invention.
FIG. 3 is an exploded perspective view of the laminated glass according to one embodiment of the present invention.
FIG. 4 is a view illustrating an antenna, a circuit board, and a cover portion that are viewed in a reference direction.
FIG. 5 is a flowchart illustrating a method of manufacturing a laminated glass according to one embodiment of the present invention.

### [Modes of the Invention]

Hereinafter, some embodiments of the present invention will be described in detail with reference to the exemplary drawings. In assigning reference numerals to components of each drawing, like components are denoted by like reference numerals wherever possible even when the components are shown in different drawings. In addition, in describing embodiments of the present invention, when detailed description of a related known configuration or function is determined as hindering understanding of the embodiments of the present invention, the detailed description thereof will be omitted.

### <One embodiment>

A laminated glass 100 according to one embodiment of the present invention may be a glass used in a vehicle. For example, the laminated glass 100 may be used for the front glass of a vehicle. However, the present invention is not limited thereto, and the laminated glass 100 may be applied to various other apparatuses and facilities.

### <First glass 110, second glass 120>

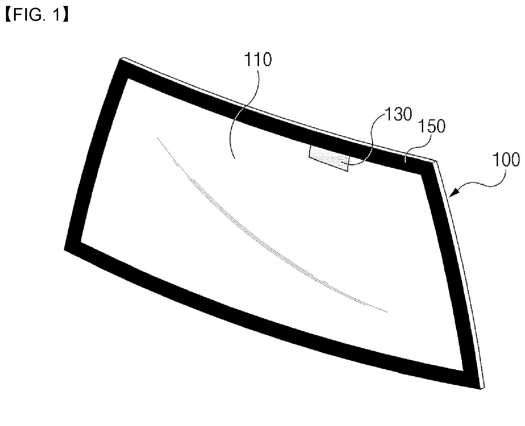

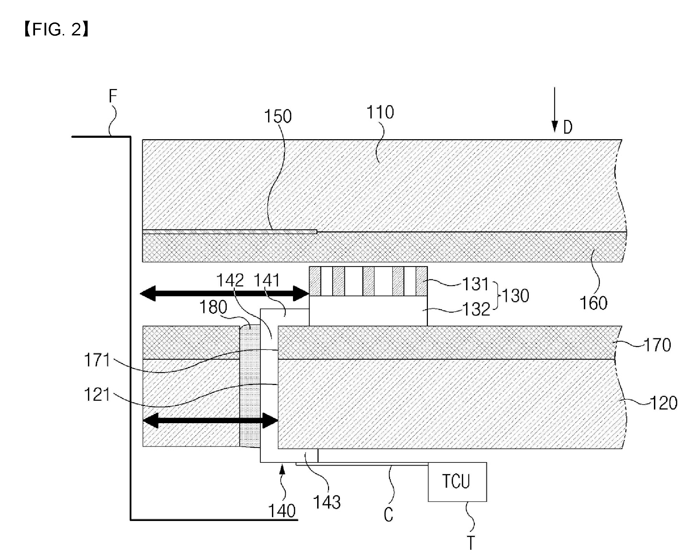

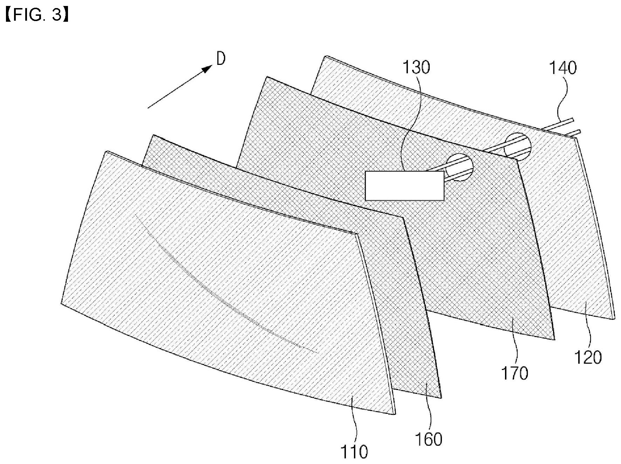

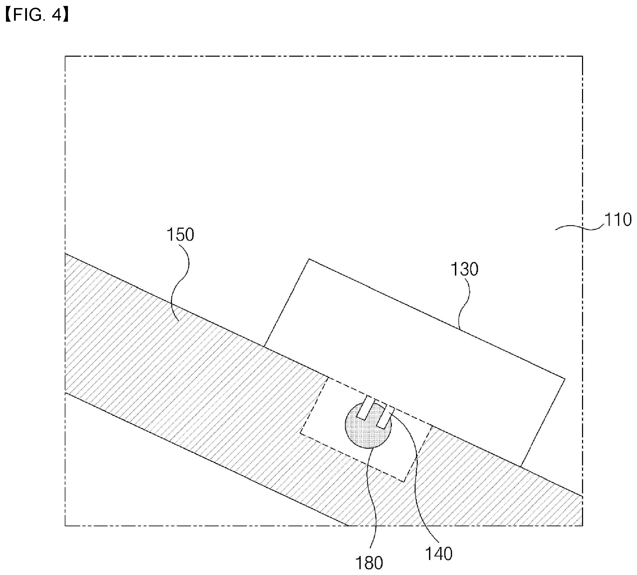

FIG. 1 is a view illustrating a laminated glass according to one embodiment of the present invention. FIG. 2 is a cross-sectional view of the laminated glass according to one embodiment of the present invention. FIG. 3 is an exploded perspective view of the laminated glass according to one embodiment of the present invention. FIG. 4 is a view illustrating an antenna, a circuit board, and a cover portion that are viewed in a reference direction D.

The laminated glass 100 may include a first glass 110, a second glass 120, an antenna 130, a circuit board 140, and a cover portion 150. The first glass 110 may be a glass disposed at an outermost side of a vehicle. The first glass 110 may be in contact with a vehicle frame F.

The second glass 120 may be spaced in the reference direction D. The reference direction D may be a direction from an outer side toward an inner side of the vehicle. A first hole 121 perforated in the reference direction D may be formed in the second glass 120. The second glass 120 may be in contact with the vehicle frame F.

One or more selected from the group consisting of a flat glass, a float glass, a quartz glass, a borosilicate glass, a soda-lime glass, a transparent plastic, a rigid transparent plastic, polyethylene (PE), polypropylene (PP), polycarbonate (PC), polymethyl methacrylate, polystyrene, polyamide, polyester, and polyvinyl chloride may be configured as the first glass 110 and the second glass 120.

In addition, the first glass 110 and the second glass 120 may be formed to be transparent. In this specification, a glass plate having a transmittance exceeding 70% in a visible light spectrum range may be considered transparent.

For example, the first glass 110 and the second glass 120 may each have a thickness ranging from 0.7 mm to 25 mm, preferably, from 1.4 mm to 2.5 mm. Shapes of the first glass 110 and the second glass 120 may correspond to each other or may be different from each other, and this may be determined according to the use purpose of the laminated glass 100.

### <Antenna 130>

The antenna 130 may be disposed between the first glass 110 and the second glass 120. For example, the antenna 130 may include a radiation pattern 131 and a base portion 132 that is disposed on a side of the radiation pattern 131 in the reference direction D.

The radiation pattern 131 may be manufactured using any one method selected from printing, plating, etching, and laser patterning. A patterned conductive layer of the antenna 130 may be formed of any one material selected from copper (Cu), nickel (Ni), silver (Ag), aluminum (Al), gold (Au), platinum (Pt), an alloy thereof, graphene, carbon nanotubes (CNTs), carbon nanowires, and a silver (Ag) paste.

A thickness of the conductive layer pattern may be relatively greater than a width thereof, or the thickness and the width may have a ratio of 1:1. The conductive layer may be printed in a polygonal shape such as a square shape or a rectangular shape or in a repeated pattern, an irregular pattern, etc. One example of the irregular pattern may be a Voronoi diagram.

One or more selected from the group consisting of plastic, polycarbonate (PC), an acrylonitrile-butadiene-styrene (ABS) copolymer, polyethylene (PE), polypropylene (PP), polyvinyl chloride (PVC), polystyrene (PS), polybutylene terephthalate (PBT), polyamide, and polyethylene terephthalate (PET) may be configured as the base portion 132.

The antenna 130 may be a coplanar waveguide with ground (CPWG) antenna. In addition, the antenna 130 may be an antenna in the form of a transparent film.

The antenna 130 may be disposed to be spaced from the vehicle frame F. Here, a distance at which the first hole 121 is spaced from the vehicle frame F may be shorter than a distance at which the antenna 130 is spaced from the vehicle frame F. For example, the antenna 130 may be spaced 10 mm to 41 mm from the vehicle frame F. Here, the first hole 121 may be spaced 5 mm to 30 mm from the vehicle frame F.

When the distance at which the first hole 121 is spaced is within the above range, it is favorable in terms of aesthetics because the cover portion 150 covers the first hole 121 filled with a sealing material 180, and the first hole 121 is not exposed to an observer outside the vehicle, and a reception rate can be increased because interference received from the vehicle frame F is reduced. On the other hand, when the distance at which the first hole 121 is spaced is below the above range, the reception rate may decrease due to interference received from the vehicle frame F, and when the distance at which the first hole 121 is spaced is beyond the above range, the first hole 121 filled with the sealing material 180 may be exposed to an observer outside the vehicle, and aesthetics may be impeded.

### <Circuit board 140>

The circuit board 140 may pass through the first hole 121 and may be connected to the antenna 130. The circuit board 140 may be a component that connects an external power source and the antenna 130. For example, the circuit board 140 may be connected to a coaxial cable C, and the coaxial cable C may be connected to a telematics control unit (TCU) T.

The circuit board 140 may be a flexible printed circuit board (FPCB). In addition, the circuit board 140 may simultaneously serve as a grounding portion and a waveguide. To this end, a CPWG antenna may be printed on the circuit board 140. The circuit board 140 may have a length ranging from 20 mm to 70 mm.

Because the antenna 130 is a CPWG antenna 130, and the circuit board 140 simultaneously serves as a grounding portion and a waveguide, a thickness of the antenna 130 may be formed to be smaller compared to when a grounding portion and a waveguide are formed on a surface of the antenna 130 in the reference direction D.

Meanwhile, the circuit board 140 may include a substrate base material and a circuit pattern. A film made of polyimide (PI), polyethylene terephthalate (PET), polycarbonate (PC), or polyether sulfone (PES) may be used as the substrate base material.

The circuit pattern may include a deposition seed layer and a circuit plating layer. The circuit plating layer may be formed by plating on the deposition seed layer. The circuit plating layer may be formed to cover only an upper surface of the deposition seed layer excluding a circumference of the deposition seed layer.

The deposition seed layer may be one of copper (Cu), silver (Ag), gold (Au), nickel (Ni), chromium (Cr), tungsten (W), molybdenum (Mo), and aluminum (Al) or may be an alloy of one or more thereof. The circuit plating layer may be any one of gold, silver, and copper.

The circuit board 140 may be provided as one or more circuit boards 140. For example, as illustrated in the drawings, the circuit board 140 may be provided as a pair of circuit boards 140. However, the present invention is not limited thereto, and a single circuit board or three or more circuit boards may be provided depending on a user's need.

### <Cover portion 150>

The cover portion 150 may be coupled to a surface of a side of the first glass 110 in the reference direction D and may extend along an edge of the surface of the side of the first glass 110 in the reference direction D. For reference, although the cover portion 150 is illustrated as having a sufficient thickness for description in FIG. 2, the cover portion 150 may actually be formed to be very thin and may protrude a very small length from a side surface of the first glass 110 in the reference direction D. The cover portion 150 may be black enamel.

When viewed in the reference direction D, the cover portion 150 may cover the first hole 121. If the cover portion 150 does not cover the first hole 121, the first hole 121 may be exposed to an observer outside the vehicle and may impede aesthetics. The laminated glass 100 according to one embodiment of the present invention may enhance aesthetics by the cover portion 150 covering the first hole 121.

In addition, when viewed in the reference direction D, the antenna 130 may include an area that does not overlap the cover portion 150. This may be to secure a sufficient separation distance between the vehicle frame F and the antenna 130 as described above.

According to one embodiment of the present invention, because the circuit board 140 is passed through the first hole 121 and the antenna 130 and the TCU T are electrically connected through the circuit board 140 while the antenna 130 can be spaced a predetermined distance from the vehicle frame F and thus interference received from the vehicle frame F can be reduced, a decrease in the reception rate of the antenna 130 that occurs as the circuit board 140 is formed to be long can be prevented.

**[Table 1]**

| Classification | Drilling | Circuit board length (mm) | Gain | | | | | |
|---|---|---|---|---|---|---|---|---|
| | | | 0.5 GHz (dB) | 1.5 GHz (dB) | 2.0 GHz (dB) | 3.5 GHz (dB) | 5 GHz (dB) | 5.5 GHz (dB) |
| 1 | X | 10 | Open circuit | Open circuit | Open circuit | Open circuit | Open circuit | Open circuit |
| 2 | X | 80 | -3.5 | -3.2 | -3.8 | -3.7 | -3.5 | -3.8 |
| 3 | O | 32 | -2.1 | -1.9 | -2.7 | -2.6 | -2.5 | -2.8 |
| 4 | O | 40 | -2.2 | -2.1 | -2.8 | -2.9 | -2.7 | -2.8 |
| 5 | O | 47 | -2.3 | -2.2 | -3.0 | -3.1 | -2.9 | -3.0 |

Reception performance of an antenna according to a length of a circuit board will be described below. Table 1 is a table showing reception performance of the antenna 130 according to whether drilling was performed and the length of the circuit board. The "X" mark in Drilling may indicate a situation in which the laminated glass 100 did not include the first hole 121 and a second hole 171, and the circuit board 140 extended along an outer edge of the laminated glass 100 and was connected to an external TCU. For an experiment, a vehicle for evaluating the performance of the antenna 130 was placed in an anechoic chamber, and then a signal intensity was measured using Network Analyzer (E8361A PNA). More specifically, using Network Analyzer, signal intensity was measured by measuring a signal returning after a signal of a predetermined frequency was sent to the antenna 130. Here, Gain in Table 1 indicates a difference measured by comparison of intensity with an omnidirectional antenna 130. That is, a greater absolute value of Gain may indicate a greater decrease in the reception rate. First, when measurement was performed using the circuit board 140 having a length of 10 mm without drilling, measurement was impossible due to an open circuit of the circuit board 140.

Second, when measurement was performed using the circuit board 140 having a length of 80 mm without drilling, it can be confirmed that, as shown in Table 1 above, the reception rate was lower compared to measurement values of numbers three to five in which drilling was performed.

Measurement values related to the laminated glass 100 having the first hole 121 formed therein will be described below. Here, description will be given based on a case in which the first hole 121 was formed through drilling at a distance of 16 mm from the vehicle frame F, and a diameter of the first hole 121 was 7 mm.

As can be seen from the results of numbers three to five, it can be confirmed that, in all frequency sections, the reception rate decreased with an increase in the length of the circuit board 140. Therefore, it can be confirmed that the shorter the length of the circuit board 140, the more the reception rate may increase.

The laminated glass 100 according to one embodiment of the present invention can reduce interference received by the antenna 130 from the vehicle frame F while minimizing the length of the circuit board 140 through the first hole 121 and increasing the reception rate.

### <First middle layer 160, second middle layer 170>

The laminated glass 100 according to one embodiment of the present invention may further include a first middle layer 160 and a second middle layer 170. The first middle layer 160 may be in contact with the side of the first glass 110 in the reference direction D. The second middle layer 170 may be in contact with a side of the second glass 120 in the opposite direction of the reference direction D.

The first middle layer 160 and the second middle layer 170 may contain at least one plastic, preferably polyvinyl butyral (PVB), ethylene vinyl acetate (EVA), and/or PET.

In addition, for example, the first middle layer 160 and the second middle layer 170 may include polyurethane (PU), polypropylene (PP), polyacrylate, polyethylene (PE), polycarbonate (PC), polymethyl methacrylate, polyvinyl chloride, polyacetate resin, casting resin, acrylate, fluorinated ethylene propylene, polyvinyl fluoride, and/or ethylene tetrafluoroethylene, or a copolymer or mixture thereof. The first middle layer 160 and the second middle layer 170 may each be a thermoplastic body.

The first middle layer 160 and the second middle layer 170 may each be formed of a single membrane or formed of a plurality of membranes arranged in parallel in the reference direction D. The first middle layer 160 and the second middle layer 170 may each have a thickness ranging from 0.025 mm to 1 mm.

The second hole 171 may be formed in the second middle layer 170. The second hole 171 may communicate with the first hole 121 and may have a shape corresponding to the first hole 121. Here, the circuit board 140 may pass through the first hole 121 and the second hole 171. In addition, the antenna 130 may be mounted on a side of the second middle layer 170 in the opposite direction of the reference direction D.

The circuit board 140 may include a first portion 141, a second portion 142, and a third portion 143. The first portion 141 may be a portion that has one end connected to the antenna 130 and is mounted on the side of the second middle layer 170 in the opposite direction of the reference direction. The second portion 142 may be a portion that extends from the other end of the first portion 141 in the reference direction D and passes through the first hole 121 and the second hole 171. The third portion 143 may be a portion that extends from an end of a side of the second portion 142 in the reference direction D and is in contact with a surface of a side of the second glass 120 in the reference direction D.

A direction in which the first portion 141 extends from the second portion 142 and a direction in which the third portion 143 extends from the second portion 142 may correspond to each other. The direction in which the first portion 141 extends from the second portion 142 may correspond to a direction from the vehicle frame F toward the first hole 121. This may indicate that the shape of the circuit board 140 is similar to a U-shape as a whole.

### <Sealing material 180>

The laminated glass 100 according to one embodiment of the present invention may further include the sealing material 180. Remaining areas of the first hole 121 and the second hole 171 excluding areas occupied by the circuit board 140 may be filled with the sealing material 180. Here, the sum of a length of the first hole 121 in the reference direction D and a length of the second hole 171 in the reference direction D may correspond to a length of the sealing material 180 in the reference direction D.

Because the first hole 121 is formed in the second glass 120, and the second hole 171 is formed in the second middle layer 170 as described above, when portions cut therefor are exposed to the outside, moisture penetration may occur through the portions. Such moisture penetration may generate bubbles in the glass and may impede aesthetics.

In the laminated glass 100 according to one embodiment of the present invention, because the remaining areas of the first hole 121 and the second hole 171 excluding the areas occupied by the circuit board 140 are sealed with the sealing material 180, moisture penetration can be prevented.

The sealing material 180 may be a thermoplastic resin. In addition, the sealing material 180 may be hydrophobic. One or more selected from the group consisting of thermoplastic polyurethane (TPU), silicon resin (Si), epoxy, high-density polyethylene (HDPE), polyvinyl chloride (PVC), ethylene vinyl acetate (EVA), and polyethylene terephthalate (PET) may be configured as the sealing material 180.

### <Method of manufacturing laminated glass>

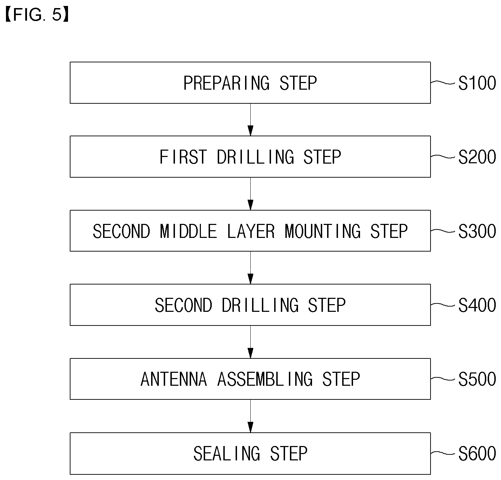

FIG. 5 is a flowchart illustrating a method of manufacturing a laminated glass according to one embodiment of the present invention. A laminated glass manufacturing method for manufacturing the laminated glass 100 according to one embodiment of the present invention will be described below based on the above-described content and the drawings.

The laminated glass manufacturing method may include a preparing step S100, a first drilling step S200, an antenna assembling step S500, and a sealing step S600. For reference, the above-mentioned steps are some of the essential steps of the laminated glass manufacturing method, and the laminated glass manufacturing method is not limited to the above steps.

The preparing step S100 may be a step of preparing the first glass 110 and the second glass 120. Preparing the first glass 110 and the second glass 120 may include a process in which glass plates are input and cut, and then corners thereof are polished.

The first drilling step S200 may be a step of drilling the first hole 121 in the second glass 120. Here, drilling the first hole 121 may be performed using a drill made of a diamond material.

The antenna assembling step S500 may be a step of placing the antenna 130 between the first glass 110 and the second glass 120 and passing the circuit board 140 connected to the antenna 130 through the first hole 121.

The sealing step S600 may be a step of filling the first hole 121 with the sealing material 180.

An inspecting step may be performed after the sealing step S600. The inspecting step may include an optical inspection process and a visual inspection process.

The laminated glass manufacturing method according to one embodiment of the present invention may further include a second middle layer mounting step S300 and a second drilling step S400. The second middle layer mounting step S300 and the second drilling step S400 may be performed between the first drilling step S200 and the antenna assembling step S500.

The second middle layer mounting step S300 may be a step of mounting the second middle layer 170 on the second glass 120.

The second drilling step S400 may be a step of forming the second hole 171 in the second middle layer 170. In the antenna 130 assembling step, the circuit board 140 may pass through the first hole 121 and the second hole 171. In the sealing step, the first hole 121 and the second hole 171 may be filled with the sealing material 180.

Steps that may be provided between different steps will be further described below.

A first washing and drying step, a printing and curing step, a molding step, and a second washing and drying step may be further performed between the first drilling step S200 and the second middle layer mounting step S300.

The first washing and drying step may be a step of washing and drying the first glass 110 and the second glass 120 in which drilling of the first hole 121 is completed.

The printing and curing step may be a step of forming the cover portion 150 by applying black enamel on the surface of the side of the first glass 110 in the reference direction D, irradiating the black enamel with UV light, and curing the black enamel.

The molding step may be a step of molding the first glass 110 and the second glass 120 into curved shapes by placing the first glass 110 and the second glass 120 on a mold and then heating them.

The second washing and drying step may be a step of washing and drying the first glass 110 and the second glass 120 that have undergone the molding step.

A first middle layer mounting step and a laminating step may be performed between the sealing step S600 and the antenna assembling step S500.

The first middle layer mounting step may be a step of mounting the first middle layer 160 on the second middle layer 170. Due to undergoing the first middle layer mounting step, the antenna 130 may be disposed between the second middle layer 170 and the first middle layer 160.

The laminating step may be a step of laminating the first glass 110 and the second glass 120 by pressing and heating the first glass 110 and the second glass 120.

The above description is merely an illustrative description of the technical idea of the present invention, and various modifications and variations can be made by those of ordinary skill in the art to which the present invention pertains without departing from the essential characteristics of the present invention. Accordingly, the embodiments disclosed in the present invention are not intended to limit the technical idea of the present invention, but are for illustrative purposes, and the scope of the technical idea of the present invention is not limited by the embodiments. The scope of protection of the present invention should be construed according to the claims below, and all technical ideas within the equivalent scope should be construed as being included in the scope of rights of the present invention.

## Claims

1. A laminated glass comprising:
a first glass;
a second glass that is spaced from the first glass in a reference direction and includes a first hole perforated in the reference direction;
an antenna disposed between the first glass and the second glass;
a circuit board that passes through the first hole and is connected to the antenna; and
a cover portion that is coupled to a surface of a side of the first glass in the reference direction and extends along an edge of the surface of the side of the first glass in the reference direction,
wherein, when viewed in the reference direction, the cover portion covers the first hole.

2. The laminated glass of claim 1, further comprising:
a first middle layer that is in contact with the side of the first glass in the reference direction; and
a second middle layer that is in contact with a side of the second glass in an opposite direction of the reference direction,
wherein a second hole that communicates with the first hole and has a shape corresponding to the first hole is formed in the second middle layer, and
the circuit board passes through the first hole and the second hole.

3. The laminated glass of claim 2, wherein:
the antenna is mounted on a side of the second middle layer in the opposite direction of the reference direction,
the circuit board includes:
a first portion that has one end connected to the antenna and is mounted on the side of the second middle layer in the opposite direction of the reference direction;
a second portion that extends from the other end of the first portion in the reference direction and passes through the first hole and the second hole; and
a third portion that extends from an end of a side of the second portion in the reference direction and is in contact with a surface of a side of the second glass in the reference direction, and
a direction in which the first portion extends from the second portion and a direction in which the third portion extends from the second portion correspond to each other.

4. The laminated glass of claim 2, further comprising a sealing material with which remaining areas of the first hole and the second hole excluding areas occupied by the circuit board are filled.

5. The laminated glass of claim 4, wherein:
the antenna is a coplanar waveguide with ground (CPWG) antenna;
the circuit board is a flexible printed circuit board (FPCB);
a length of the circuit board ranges from 20 mm to 70 mm; and
the sealing material is a thermoplastic resin.

6. The laminated glass of claim 1, wherein, when viewed in the reference direction, the antenna includes an area that does not overlap the cover portion.

7. A method of manufacturing a laminated glass, the method comprising:
a preparing step of preparing a first glass and a second glass;
a first drilling step of drilling a first hole in the second glass;
an antenna assembling step of placing an antenna between the first glass and the second glass and passing a circuit board connected to the antenna through the first hole; and
a sealing step of filling the first hole with a sealing material.

8. The method of claim 7, further comprising:
a second middle layer mounting step of mounting a second middle layer on the second glass; and
a second drilling step of forming a second hole that communicates with the first hole and has a shape corresponding to the first hole in the second middle layer.

9. The method of claim 8, wherein:
in the antenna assembling step, the circuit board passes through the first hole and the second hole; and
in the sealing step, the first hole and the second hole are filled with the sealing material.
